Europäisches Patentamt

(19) European Patent Office (11) Publication number: **0 102 117**

Office européen des brevets **B1**

(12) **EUROPEAN PATENT SPECIFICATION**

(45) Date of publication of patent specification: **23.09.87** (51) Int. Cl.⁴: **A 01 F 12/44,** A 01 D 41/12

(21) Application number: **83201170.4**

(22) Date of filing: **09.08.83**

(54) Rotary cleaning mechanism and method for cleaning threshed grain in combines.

(30) Priority: **17.08.82 US 408982**
**17.08.82 US 408989**

(43) Date of publication of application:
**07.03.84 Bulletin 84/10**

(45) Publication of the grant of the patent:
**23.09.87 Bulletin 87/39**

(84) Designated Contracting States:
**DE FR GB IT**

(56) References cited:
**GB-A- 820 764**
**US-A-4 198 802**

(73) Proprietor: **NEW HOLLAND N.V.**
**Leon Claeysstraat 3a**
**B-8210 Zedelgem (BE)**

(72) Inventor: **Decoene, Frans J.G.C.**
**Ruddervoordestraat 19**
**B-8210 Zedelgem (BE)**
Inventor: **Strubbe, Gilbert J.I.**
**Loppemsestraat 58/b**
**B-8210 Zedelgem (BE)**

(74) Representative: **Vandenbroucke, Alberic T.J.**
**et al**
**SPERRY NEW HOLLAND DIVISION OF SPERRY**
**N.V. Leon Claeysstraat, 3A**
**B-8210 Zedelgem (BE)**

## Description

The present invention relates generally to combine harvesters and, more particularly, to a rotatable cleaning mechanism for such combine harvesters and to a method for utilizing such a rotatable cleaning mechanism for cleaning unwanted residue, such as chaff, straw, etc. from threshed grain.

Conventional cleaning systems such as the one shown in DE—A—1,957,933 clean threshed grain by blowing air through a set of planar sieves utilizing gravitational forces to urge cleaned grain through the sieve openings. With the advent of higher capacity threshing and separating mechanisms, such as rotary axial flow combines (e.g. US—A—3,848,609), the capacity for threshing grain has increased beyond the capacity of conventional cleaning systems to clean the grain.

Accordingly, it is desirable to increase both the capacity and the efficiency of cleaning systems in combine harvesters so as to limit the throughput capability of the combine.

The capacity and the efficiency of conventional cleaning systems are furthermore greatly reduced when operating in hilly conditions due to, amongst other things, the irregular distribution of threshed grain on the cleaning sieves. Conventional cleaning systems are also quite sensitive to an irregular pattern of the cleaning air across the cleaning sieves.

Some prior art rotary cleaning mechanisms (e.g. US—A—3,756,406) continue to utilize gravitational forces to clean the threshed grain and, thus, do not greatly increase the capacity of the cleaning mechanism. Other prior art rotary cleaning devices such as the one shown in US—A—4,198,802, do utilize centrifugal forces to increase their throughput capacity; however, such known devices have utilized frusto-conical sieves that are reciprocated in a direction parallel to the axis of rotation of the sieves. Such devices can be cumbersome, take up great amounts of space, and be subject to excessive vibrations due to the reciprocating movement of the conical sieves.

It is therefore the object of the present invention to overcome the aforementioned disadvantages of the prior art and to improve the throughput capacity of combine cleaning devices while making the operation thereof fully insensitive to hilly conditions and making the cleaning performance less dependent from the cleaning air distribution pattern across the cleaning sieves.

It is further also the object of this invention to eliminate excessive external vibrations caused by the reciprocating movements of the rotating sieves to effect a rearward movement of the grain over the sieves.

These and other objects are accomplished according to the instant invention in a combine harvester having a threshing and separating means for threshing and separating grain crop from waste material in crop material fed thereto and a cleaning mechanism mounted for receiving threshed grain from the threshing and separating means and cleaning unwanted residue from threshed grain, and wherein the cleaning mechanism comprises:

— rotary cleaning means including:

· a sub-frame rotatable about an axis of rotation and

· a plurality of elongated cleaning shoes circumferentially spaced about the periphery of and mounted on the subframe for rotation in unison therewith; each cleaning shoe having at least one sieve means for the passage of cleaned grain therethrough;

— drive means for rotatably driving the subframe about said axis of rotation;

— oscillating means for reciprocating the sieve means in a generally axial direction;

— an infeed mechanism positioned for distributing threshed grain into the rotary cleaning means;

— a housing surrounding the rotary cleaning means for collecting cleaned grain from the sieve means; and

— fan means for creating a flow of air through the sieve means to urge unwanted residue in the threshed grain into an airborne state for discharge from the combine harvester.

The foregoing rotary type cleaning mechanism is characterized in that the sieve means are disposed generally parallel to the axis of rotation and further also in that the generally axially directed reciprocating movement of the sieve means is inclined at an angle relative to the axis of rotation to move threshed grain along said sieve means.

These objects are also accomplished according to the instant invention by providing a method of cleaning threshed grain in a combine harvester comprising the steps of:

— feeding the threshed grain into rotary cleaning means which are rotatable along an axis of rotation and which include sieve means;

— rotating the rotary cleaning means at a speed sufficient to impart centrifugal forces on the threaded grain on the sieve means to urge grain radially outwardly through openings therein;

— reciprocating in a generally axial direction and simultaneously with the rotating step a plurality of elongated, generally axially extending cleaning shoes which are mounted around the circumference of the rotary cleaning means and which include the sieve means;

— creating a flow of air through the rotary cleaning means to clean unwanted residue in the threshed grain by making the residue airborne;

— collecting cleaned grain passing radially outwardly through the sieve means of the rotary cleaning means for transfer to a storage tank; and

— discharging unwanted residue from the rotary cleaning means in an airborne state.

The method further is characterized in that the generally axially directed reciprocational movement of the cleaning shoes is inclined inwardly toward the axis of rotation as seen in the intended direction of movement of threshed grain axially through the rotary cleaning means and with the sieve means extending generally parallel to the axis of rotation. The reciprocating step in said generally axially and inwardly inclined direction together with the rotating step and the step of creating a flow of air is operable to convey threshed grain generally axially along the sieve means while cleaning grain on said sieve means and helping cleaned grain passing through the sieve openings.

The utilization of centrifugal forces to urge grain through the sieve openings, rather than gravitational forces, will increase the capacity of the cleaning system. The provision of axially extending cleaning sieves reciprocatably moving along a slightly non-axial direction directed inwardly toward the axis of rotation permits a sleek, efficient cleaning device to be incorporated in the base unit of the combine. The use of a blowing fan, as compared to a fan that draws air through the cleaning cylinder, enables the flow of air to be directed in an efficient manner.

It is a feature of the present invention that the cleaning mechanism is generally cylindrical, as opposed to conical as in certain prior art arrangements. This has become possible by providing the cleaning shoes and cleaning sieves generally parallel to the axis of rotation of the rotary cleaning means on the one hand and by reciprocating the individual cleaning shoes generally axially at a slight inward inclination toward the axis of rotation, as seen in the intended direction of movement of threshed grain through the cleaning mechanism on the other hand.

It is an advantage of this invention that the individual cleaning shoes are disposed adjacent one another along the circumferential periphery of the rotary cleaning means so that a seal can be provided to prevent threshed grain from being lost between the individual cleaning shoes.

It is another feature of this invention that two sieves, one radially outwardly from the other, are mounted within each cleaning shoe to provide a more favourable cleaning action.

It is still another feature of this invention that the size of openings within the sieves in each cleaning shoe can be varied to correspond to different crops and crop conditions.

It is another advantage of this invention that excessive vibrations caused by the reciprocable movements of the sieves are minimized by providing an oscillating mechanism that keeps the number of cleaning shoes moving forwardly equal to the number of cleaning shoes moving rearwardly.

It is yet another feature of this invention that the amount of centrifugal force applied to urge the clean grain through the sieves is variable by controlling the speed of rotation of the rotary cleaning means.

The advantages of this invention will become apparent upon consideration of the following detailed disclosure of the invention, especially when taken in conjunction with the accompanying drawings wherein:

Fig. 1 is a side elevational view of a crop harvesting machine, commonly referred to as a combine, incorporating the principles of the instant invention, a portion of the combine being broken away to highlight the rotary cleaning mechanism housed therein;

Fig. 2 is an enlarged cross-sectional view of the rotary cleaning mechanism taken along lines 2—2 of Fig. 1, extraneous portions of the combine being broken away for clarity;

Fig. 3 is a partial cross-sectional view of the rotary cleaning mechanism taken along lines 3—3 of Fig. 2, lines 3—3 being taken between individual cleaning shoes at the top of the drawing and cross-sectionally through a cleaning shoe at the bottom of the drawing, other cleaning shoes and associated connecting mechanisms being removed for purposes of clarity;

Fig. 4 is a cross-sectional view of the rotary cleaning mechanism taken along lines 4—4 of Fig. 3 to show the infeed area and fan housing, portions being broken away for clarity;

Fig. 5 is a diagrammatic view of a portion of the rotary cleaning mechanism to show the operation thereof relative to one of the individual cleaning shoes, as well as the flow of air through the fan housing to clean the grain, the oscillatory movement of the cleaning shoe being shown in phantom;

Fig. 6 is a partial cross-sectional view showing one of the individual cleaning shoes and associated connecting linkages, taken along lines 6—6 of Fig. 3;

Fig. 7a is a partial cross-sectional view of the grain pan forming a part of each individual cleaning shoe, taken along lines 7—7 of Fig. 6; and

Fig. 7b is a partial cross-sectional view corresponding to Fig. 7a but showing an alternative embodiment of the grain pan configuration.

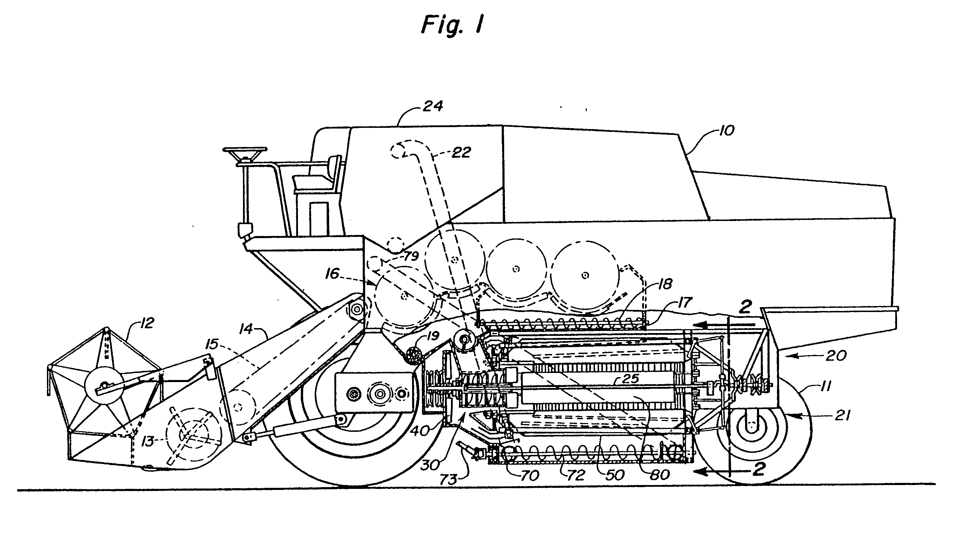

Referring now to the drawings, and particularly to Fig. 1, a side elevational view of a crop harvesting machine, commonly referred to as a combine, can be seen. The combine base unit 10 is mounted on a wheeled frame 11 and operatively powered by an engine (not shown) suitably housed within the base unit 10 to provide driving power for the mobile base unit 10 and the harvesting apparatus mounted thereon and described below. The transfer of rotational power from the engine to the various driven components is of a conventional nature and could include fixed or variable belt or chain drives and have not been shown in the drawings for purposes of clarity.

A forwardly mounted crop harvesting header 12 is conventional in the art and is operable to sever the standing crop, consolidate it and feed it rearwardly by means such as the auger 13 to the feeder housing 14, interconnecting the base unit 10 and the header 12. The feeder housing 14 is generally a hollow conduit for housing a crop conveyor 15 operable to convey the consolidated crop material to the base unit 10. Threshing and separating apparatus 16 is suitably housed within the base unit 10 to receive crop material being fed rearwardly by the feeder house conveyor 15 and thresh the crop material to separate the edible grain crop from the waste material, such as stalks, straw and other residue. The threshing and separating means 16 seen in Fig. 1 is of the type described in detail in U.S. Patent No. 3,946,746. It should be noted by one skilled in the art that the threshing and separating means 16 could also be of other designs, such as a conventional threshing cylinder and concave or a rotary axial flow.

As can be seen in Fig. 1, the uncleaned threshed grain is collected on a floor 17 and conveyed to a central collection point by at least one auger 18 and/or a throwing mechanism 19 for delivery to a cleaning mechanism 20 to clean the edible grain from remaining residue such as chaff and short pieces of straw. After being cleaned, the grain is transported by an elevating mechanism 22 to a grain tank 24 supported by the frame 11 in the base unit 10 for temporary storage during the harvesting operation, while the unwanted residue is discharged from the discharge end 21 of the cleaning mechanism 20.

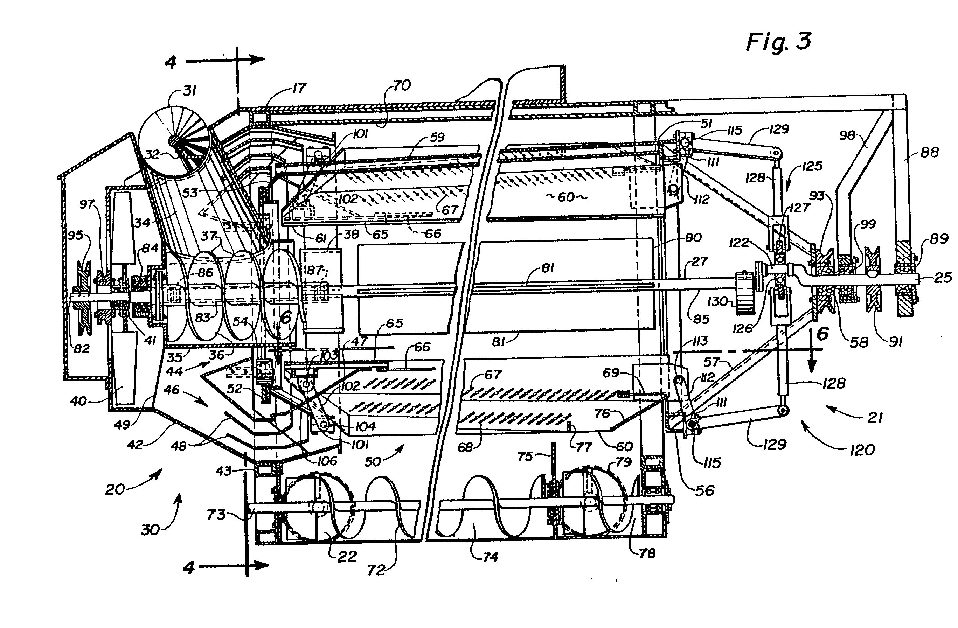

Referring to Figs. 1 and 3, it can be seen that the cleaning mechanism 20 is rotatably supported within the base unit 10 for rotation about an axis of rotation 25 defined by a composite shaft 27. The cleaning mechanism 20 includes an infeed mechanism 30, a blower fan 40, a rotatable cleaning cylinder 50, including individually oscillating cleaning shoes 60, an impeller 80, a housing 70 for collecting the cleaned grain, a conveying auger 72 for transporting collected cleaned grain to the elevator 22 for transfer to the grain tank 24, and a drive mechanism for rotatably powering the rotary cleaning mechanism 20 and oscillating the individual shoes 60.

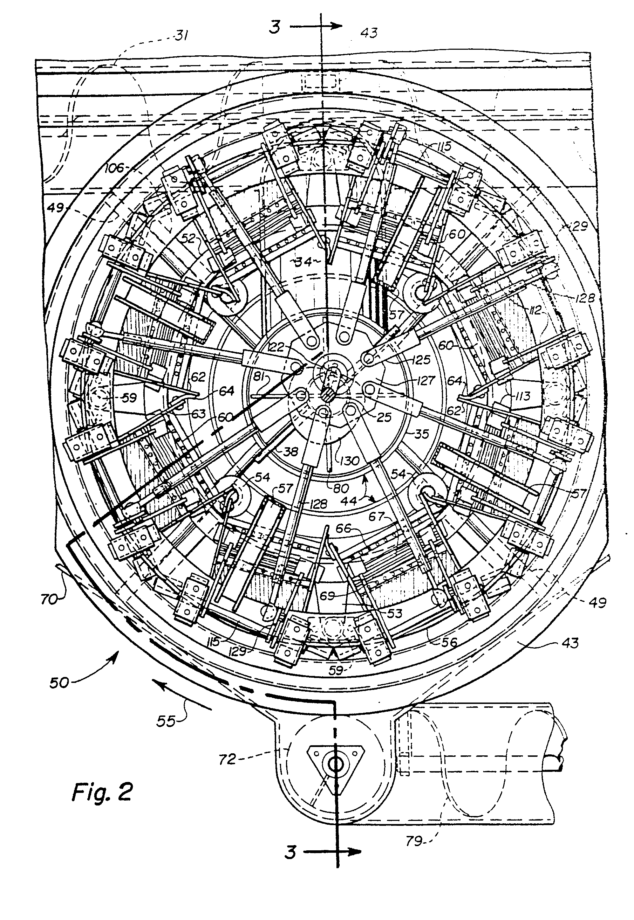

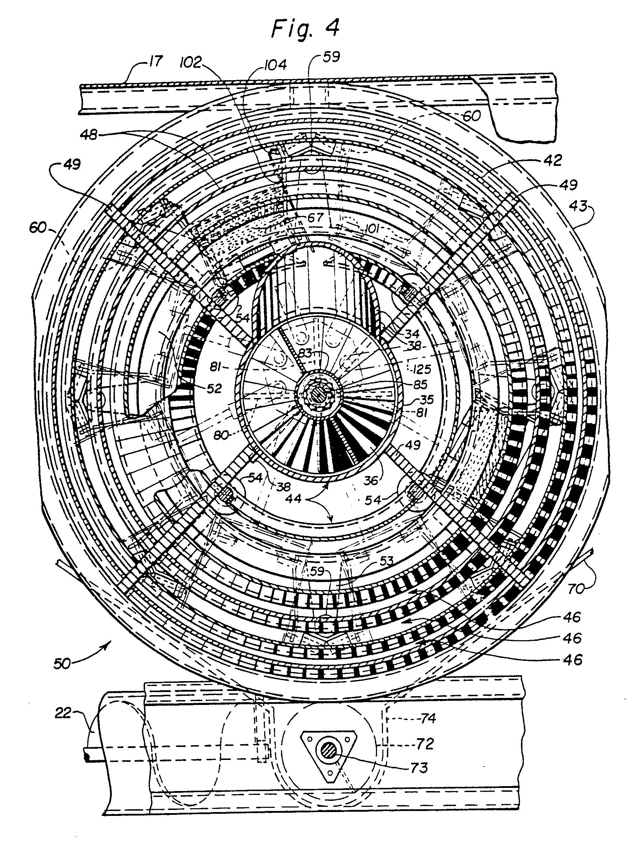

The infeed mechanism 30 is generally seen in Fig. 1, but best seen in detail in Figs. 3 and 4. Uncleaned grain conveyed by a series of augers 18 over the floor 17 and by the thrower mechanism 19 is collected by a transversely disposed collecting auger 31 (also seen in phantom in Fig. 2) and consolidated toward a centrally disposed infeed chute 34. The uncleaned grain is directed down the infeed chute 34 by gravity and by at least one paddle 32 forming a part of the transverse collecting auger 31 above the infeed chute 34. The infeed chute 34 forms part of the infeed housing 35 within which is mounted an infeed auger 36 rotatable about the axis of rotation 25.

The infeed auger 36 is shown as having double helical flights 37 terminating in a pair of distributing paddles 38 for discharging uncleaned grain radially outwardly from the infeed auger 36 onto the cleaning cylinder 50. As shown, the paddles 38 may extend radially outwardly from the auger shaft 83 at a location beyond the discharge end of the infeed housing 35. Alternatively, the discharge paddles 38 may extend at an angle relative to the radius of the auger shaft 83. Said paddles 83 even may partially overlap the discharge end of the infeed housing 35. As is best seen in Fig. 3, the infeed chute 34 flares out from top to bottom such that the portion of the chute 34 adjacent the transverse auger 31 is smaller than the portion of the chute 34 adjacent the infeed auger 36. This particular infeed chute configuration will help prevent clogging problems in the transfer of uncleaned grain from the auger 31 to the infeed auger 36.

To provide a flow of air to clean unwanted chaff, short straw, etc. from the grain within the cleaning cylinder 50, the blowing fan 40 best seen in Figs. 1 and 3, is rotatably mounted on the composite shaft 27 by bearing 41 within housing 42 to blow air toward the cleaning cylinder 50. The fan housing 42 surrounds the infeed housing 35 and is stationarily mounted on the sub-frame 43 to direct air blown by the fan 40 toward the cleaning cylinder 50 around the infeed housing 35. The infeed chute 34 is somewhat elliptical in cross-sectional configuration to enable air to flow therearound and reach the cleaning cylinder 50 immediately adjacent thereto. It should be noted that the infeed housing 35 and infeed chute 34 are also stationarily mounted on the sub-frame 43, while the cleaning cylinder 50 is rotatable relative thereto about the axis of rotation 25.

The fan housing 42 is generally circular and includes a first annular passageway 44 adjacent the infeed housing 35 to direct air toward the grain being discharged from the distributing paddles 38 before contacting the cleaning cylinder 50. The fan housing 42 also defines a second annular passageway 46 for directing air rearwardly along the cleaning cylinder 50 in a direction generally radially inwardly toward the centrally disposed axis of rotation 25. As can be seen in Figs. 1, 3, 4 and 5, a series of generally concentric deflector vanes 48 are disposed within the second passageway 46 and structurally supported by struts 49 extending radially outwardly from the infeed housing 35 to distribute the air blowing through the second passageway 46 along the length of the entire cleaning cylinder 50 to clean the residue from the grain and discharge it out of the discharge end 21.

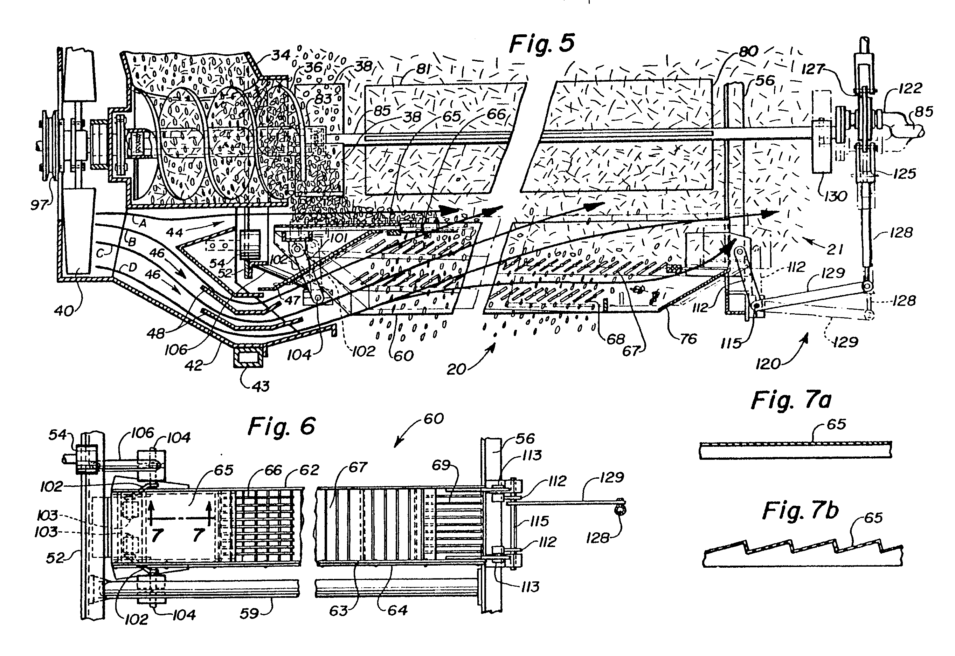

A deflector plate 70 is affixed to the cleaning cylinder 50 and extends forwardly therefrom to a position adjacent the fan housing 42 to assist in directing the flow of air from the fan 40. Additional deflector plates may be provided proximate to the sieve means 67, 68 at locations radially outwardly therefrom. The arrows A, B, C and D in Fig. 5, diagrammatically indicate the flow of air through the fan housing 42 to the cleaning cylinder 50 for cleaning the chaff and other residue from the uncleaned grain. It should be realized by one skilled in the art that this air flow pattern extends 360° around the infeed housing 35, except as is necessary to bypass the infeed chute 34. It should also be remarked that the fan 40 has a comparatively small diameter, when compared to the overall dimensions of the cleaning cylinder 50.

The cleaning cylinder 50 is generally comprised of a plurality of elongated, axially extending cleaning shoes 60 rotatably supported on the composite shaft 27 by a frame 51. The frame 51 includes a forward support ring 52 rotatably supported on rollers 54 carried by the struts 49 and a rearward support ring 56 rotatably supported through frame members 57 by the bearing 58 on the composite shaft 27. A plurality of fore-and-aft extending frame members 59 extend between the forward support ring 52 and the rearward support ring 56 to provide the required rigidity and support for the cleaning cylinder 50.

As is best seen in Fig. 3, the rearward support ring 56 is of a larger diameter than the forward support ring 52. The fore-and-aft frame members 59 are connected to the forward support ring 52 via a flange 53 and connected directly to the rearward support ring 56.

A plurality of cleaning shoes 60 are equidistantly spaced around the circumference of the cleaning cylinder 50 and supported by the frame 51. As is seen in Figs. 2 and 4, the preferred embodiment incorporates eight individual elongated cleaning shoes 60 extending generally between the forward support ring 52 and the rearward support ring 56. Each cleaning shoe 60 is supported from the frame 51 by linkages 101, 111, described in further detail below, to permit an oscillating, generally fore-and-aft motion thereof relative to the frame 51. Each shoe 60 includes first and second spaced-apart generally parallel sidewalls 62, 63 that are disposed generally radially to the composite drive shaft 27. Adjacent cleaning shoes 60 are positioned such that the first sidewall 62 of one shoe 60 is adjacent the second sidewall 63 of the adjacent shoe 60. A flexible seal 64 is connected to each second sidewall 63 to contact the adjacent first sidewall 62 and form a seal therebetween and direct crop into one or the other of the adjacent shoes 60.

The construction of each individual cleaning shoe 60 is best seen in Figs. 3 and 6. The forward end 61 of each cleaning shoe 60 includes a grain pan 65 disposed radially outwardly from the distributing paddles 38 to receive grain discharged therefrom and convey the grain rearwardly onto the inner sieve 67. It is not desirable to discharge grain from the paddles 38 directly onto the inner sieve 67 as plugging could occur. As seen in Figs. 7a and 7b, the grain pan 65 can have either a smooth or a saw tooth cross-sectional configuration. Because of the combined oscillatory and rotary movements of the cleaning shoes 60, as will be described in further detail below, it has been found that a smooth grain pan 65, as seen in Fig. 7a, will sufficiently convey grain rearwardly toward the discharge end 21 of the cleaning cylinder 50. As seen in Fig. 3, the grain pan 65 is spaced radially outwardly from the distributing paddles 38 so that air flowing through the first passageway 44 can partially clean the grain before contacting the grain pan 65.

The spaced-apart sidewalls 62, 63 of each cleaning shoe adjustably support an inner sieve 67 and an outer sieve 68 spaced radially outwardly relative to the composite shaft 27 from the inner sieve 67. The sieves 67, 68 have substantially the same width and are generally of conventional construction, having an adjustable setting to correspond to different crops and crop conditions. The sieves 67, 68 are operable to permit the passage of clean grain therethrough while the unwanted residue is blown rearwardly from the cleaning cylinder 50 by the flow of air generated by the fan 40. Further detail of the construction and operation of the sieves can be found in U.S. Patent No. 4,259,829.

As shown in Figs. 3 and 5, the cleaning sieves 67, 68 extend at a slight angle to the axis of rotation 25 diverging from said axis of rotation as they extend rearwardly away from the infeed mechanism 30.

Alternatively said sieves 67, 68 may extend generally parallel to said axis of rotation.

As is best seen in Fig. 2, the cleaning sieves 67, 68 further also extend in a generally tangential direction to the radius of the cleaning cylinder 50 at a slight angle inclined in the direction of rotation of said cleaning cylinder. Preferably this slight angle of inclination is in the range of 3 to 10° and is intended to avoid threshed grain to accumulate on the sieves 67, 68 at the side edge thereof opposite to the direction of rotation of the cylinder 50 and against the cleaning shoe side walls 62.

As can be seen in Fig. 3, the inner sieve 67 is spaced generally radially outwardly from the grain pan 65. Grain being moved rearwardly on the grain pan 65 by the oscillatory movement of the cleaning shoes 60 will fall radially outwardly, due to centrifugal forces generated by the rotation of the cleaning cylinder 50, from the grain pan 65 onto the inner sieve 67. A series of raking tines 66 are attached to the rearward end of the grain pan 65 to comb through the grain passing from the grain pan onto the inner sieves 67. The combing action of the raking tines 66 allows smaller material, such as the grain, to drop first onto the sieve 67 while the longer straw residue is normally held up, preferably falling on top of the mat of grain settling onto the inner sieves 67. Accordingly, the raking tines 66 will be operable to somewhat grade the grain to be cleaned, thereby helping the cleaning process and permit the mat of grain crop placed onto the inner sieves 67 to be less dense.

A second set of raking tines 69 is positioned at the end of the inner sieve 67 to permit any unthreshed heads of grain crops to pass therethrough and drop to a tailings auger 79 as will be described in further detail below, while any remaining residue having sufficient weight to prevent it from becoming airborne, such as longer pieces of straw, can pass rearwardly from the cleaning cylinder 50 beyond the rearward support ring 56 for discharge from the cleaning mechanism 20.

A generally cylindrical stationary housing 70 forms a shell surrounding the rotating cylinder 50. Because of the rotational movement of the cleaning cylinder 50, centrifugal forces are generated to urge cleaned grain to pass radially outwardly through the sieves 67, 68 and exit from the cleaning shoe 60 in a radially outward direction.

Accordingly, clean grain can pass from the cleaning cylinder 50 upwardly and outwardly as well as downwardly. The stationary housing 70 prevents clean grain from being lost from the combine 10 and directs it downwardly by gravity to a conveying auger 72 rotatably driven on shaft 73.

Clean grain emerging from the outer sieves 68 of the cleaning shoes 60 will ultimately fall into the clean grain section 74 at the bottom of the housing 70 and be conveyed by the grain elevator 22 to the grain tank 24 for temporary storage. Unthreshed heads passing through the second set of raking tines 69 are directed by the ramp 76 and the baffle 77 into the tailings section 78 formed at the bottom of the stationary housing 70. The unthreshed heads are consolidated by the auger 72 and fed into the tailings auger 79 to be conveyed back to the threshing and separating means 16. A stationary baffle 75 separates the clean grain section 74 from the tailings section 78.

For centrifugal force to be effective to move the grain through the sieves 67, 68, the grain must be in contact with the sieves 67, 68. To assure that grain kernels will not be suspended in mid-air within the cleaning cylinder 50 without being in contact with any of the cleaning shoes 60, an impeller 80 is provided. The impeller 80 consists of four blades 81 projecting outwardly from the shaft 27 in an equally spaced relationship. Any grain contacting the impeller 80 will be forced radially outwardly onto the inner sieve 67 of the cleaning shoes 60.

It should be noted that it is desirable to have the chaff and other residue blown outwardly and rearwardly through the cleaning cylinder 50 to be discharged therefrom. Due to the force of the air being blown by the fan 40, the weight of the airborne chaff and other residue, and the speed of rotation of the impeller 80, the impeller 80 will not give sufficient impelling action to the chaff and other residue to force it radially onto the inner sieve 67 of the cleaning shoes, thereby permitting the residue to remain airborne and exit the discharge end 21.

Drive shaft 27 is a composite shaft including an infeed auger drive shaft 82 and an impeller drive shaft 85. Also rotatably mounted on the composite shaft 27 are drives for rotatably powering the cleaning cylinder 50 and the fan 40. The impeller drive shaft 85 terminates at a bearing 86 mounted within the tubular portion 83 of the infeed auger drive shaft 82, which, in turn, terminates at bearing 87 also rotatably supporting the shaft 85 within the tubular portion 83 of the shaft 82. It should be noted that the impeller drive shaft 85 is also supported in the frame member 88 by a bearing 89. Likewise, the infeed auger drive shaft 82 is also rotatably supported by bearing 84 mounted within the infeed housing 35.

For purposes of convenience and clarity, none of the drive transfer belts and other associated mechanisms extending from the engine (not shown) to the various drives, which are conventional in the art, have been shown. Only the particular pulleys and other drive components as relate directly to the cleaning mechanism 20 will be described. As can be seen in Fig. 3, the impeller drive shaft 85 is rotatably driven by pulley 91 keyed to the shaft 85 to be rotatable therewith. The cleaning cylinder 50 is rotatably driven by the pulley 93 concentrically mounted on the impeller drive shaft 85. Bearings 58 permit the pulley 93 to be rotatable independently of the shaft 85 so that pulleys 91 and 93 can be driven at different speeds.

The infeed auger driver shaft 82 is rotatably powered by the pulley 95 keyed to the shaft 82 and rotatable therewith. The fan 40 is rotatably powered through a pulley 97 affixed thereto, the fan 40 being rotatably mounted on the drive shaft 82 by the bearings 41 for rotation independently of the shaft 82. The stationary frame member 98 also rotatably supports the impeller drive shaft 85 by bearing 99 adjacent the pulley 91 to provide support thereto. It should be noted that in the preferred embodiment, each of the pulleys 91, 93, 95 and 97 are shown to be belt-driven pulleys, all of which are to be rotated in a clockwise direction when viewed from the rear and as shown by arrow 55 in Fig. 2.

One skilled in the art would readily see that other equivalent ways of rotatably powering the various components could be provided such as with chain drives. Also one or more of the drive directions may be reversed.

It has been found that satisfactory results can be obtained when the fan 40 is rotated in the range of 1500 to 2500 revolutions per minute (RPM) with the infeed auger 36 being rotated in the range of 500 to 1000 RPM, the cleaning cylinder 50 being rotated in the range of 100 to 250 RPM and the impeller 80 driven in the range of 350 to 550 RPM. It has also been found that the impeller 80 should be rotated at a speed approximately three to five times as fast as the cleaning cylinder 50. The resultant centrifugal force should be in the order of five times the force of gravity. As one skilled in the art will readily see, the force of gravity becomes a mere component of the forces exerted on the grain to urge them through the sieves 67, 68.

Referring now to Figs. 2, 3 and 6, it can be seen that each cleaning shoe 60 is movably mounted for a generally fore-and-aft reciprocating movement. The forward end 61 of each cleaning shoe 60 is pivotally connected to a linkage 101, comprising a pair of spaced-apart links 102 pivotally connected by a pivot 103 at one end thereof to the cleaning shoe 60 and by a pivot 104 at the other end thereof to the cylinder frame 51. Each pivot 103, 104 is affixed to a block of resilient material, such as rubber. The pivots 104 can be mounted to the fore-and-aft frame members 59 or to a separate support member 106 extending from the forward support ring 52. As can be seen in phantom in Fig. 5, the forward end of each cleaning shoe 60 is movable in a generally fore-and-aft direction inclined radially inwardly as it moves rearwardly about the pivot 104.

The rearward end of each cleaning shoe 60 is pivotally connected to a connecting linkage 111 for movement in a generally fore-and-aft direction, as described above relative to the forward end. Each connecting linkage 111 includes a pair of spaced-apart links 112 pivotally connected at one end by pivot 113 to the respective cleaning shoe 60. The opposing end of each link 112 is affixed to a rock shaft 115 pivotally supported by the rearward support ring 56. As can be seen in phantom in Fig. 5, each cleaning shoe 60 is pivotally movable in a fore-and-aft direction that is inclined radially inwardly relative to the axis of rotation 25, as it moves rearwardly.

Referring now to Figs. 2, 3, 5 and 6, the drive mechanism 120 for oscillating each cleaning shoe 60 in the aforementioned fore-and-aft direction can be seen. The impeller drive shaft 85 is provided with an eccentric crank portion 122. A spider assembly 125 is rotatably mounted on the crank portion 122 by bearing 126 and includes a plate member 127 housing the bearing 126 and a plurality of generally radially extending push rods 128 pivotally connected to the plate member 127. A rocket arm 129 is affixed to each rock shaft 115 and extends rearwardly therefrom for pivotal connection with a corresponding push rod 128.

As can best be seen in Figs. 2 and 3, the rotation of the impeller drive shaft 85 causes the spider assembly 125 to rotate on the crank portion 122 at a distance spaced from the axis of rotation 25. This orbiting of the plate member 127 causes each push rod 128 to move from a radially inward position to a radially outward position and back to the radially inward position with each revolution of the drive shaft 85. The transfer of the movement of each push rod 128 to the respective cleaning shoe 60 through the connecting linkage 111 effects a reciprocatory movement of the respective cleaning shoe 60 along the previously defined radially inwardly inclined direction.

As one skilled in the art will readily realize, the oscillating movement of the cleaning shoes 60 occurs because of the relative rotational movement between the crank portion 122 and the cleaning cylinder 50. If the cleaning cylinder 50 were being rotatably driven at a rotational speed equal to the impeller drive shaft 85, the cleaning shoes 60 would not be reciprocated. Accordingly, the frequency of oscillation of each cleaning shoe 60 is equal to the rotational speed of the impeller shaft pulley 91 less the rotational speed of the cleaning cylinder pulley 93. For example, if the impeller shaft 85 were rotated at a speed of 525 RPM, and the cleaning cylinder 50 were rotated at a speed of 120 RPM, each cleaning shoe 60 would receive 405 shakes per minute.

As one skilled in the art will further realize, the spider assembly 125 seen in Fig. 2 will result in each cleaning shoe 60 being reciprocated 45° out of phase relative to the adjacent cleaning shoe 60, opposing cleaning shoes 60 being reciprocating 180° out of phase. Accordingly, the external vibrations induced by the reciprocating movement of the cleaning shoes 60 will be kept to a minimum, with the mass of cleaning shoes 60 moving forwardly being equal to the mass of cleaning shoes 60 moving rearwardly at any given point in time, resulting in a counterbalancing effect.

An alternative drive mechanism could include the use of universal joints interconnecting pairs of rock shafts 115 on adjacent cleaning shoes 60, with one rocker arm 129 being affixed to one of the rock shafts 115 of each interconnected pair of shoes 60. Under such an arrangement of parts, the spider assembly 125 would have only four push rods 128 connected, respectively, to corresponding rocker arms 129. Accordingly, each interconnected pair of shoes 60 would be oscillated together, each pair of shoes 60 being 90° out of phase with the adjacent interconnected pair of shoes 60, thereby maintaining the counterbalancing effect.

The spider assembly 125 orbiting about the axis of rotation 25 with an unsymmetrical distribution of mass relative thereto causes a certain unbalance and would result in excessive vibrations. To keep these vibrations to a minimum, a counterweight 130 is attached to the impeller drive shaft 85 at a position adjacent the crank portion 122. The counterweight 130 is positioned on the drive shaft 85 such that its mass counterbalances the mass of the spider assembly 125 and crank eccentric 122 offset from the axis of rotation 25 of the cleaning cylinder 50. The cleaning sieves 67, 68 of each cleaning shoe 60 are fixedly positioned relative to each other and are movable in unison relative to the frame 51. In an alternative arrangement the cleaning sieves 67—68 of each cleaning shoe 60 may also be mounted for oscillation in opposite directions.

Referring now to the diagrammatic view seen in Fig. 5, the operation of the cleaning mechanism 20, with respect to one of the cleaning shoes, is representatively shown. Although only one of the cleaning shoes 60 will be operatively described, it should be clear that each cleaning shoe around the entire circumference of the cleaning cylinder 50 is simultaneously operating in the same manner, with the cleaning shoe 60 at the top of the cleaning cylinder 50 discharging cleaned grain upwardly, away from the axis of rotation 25. Uncleaned grain is fed through the infeed chute 34 into the infeed housing 35 whereupon it is engaged by the infeed auger 36 and conveyed rearwardly. The distributing paddles 38 disperse the uncleaned grain in a radially outward direction toward the grain pans 65 on the cleaning shoes 60. Although Fig. 5 depicts uncleaned grain being dispersed in a representative manner by only one of the distributing paddles 38, it should be realized by one skilled in the art that the paddles 38 are operable to feed the grain outwardly in a 360° arc. Since the infeed auger 36 is being rotated 5 to 10 times as fast as the cleaning cylinder 50, the distributing paddles 38 distribute uncleaned grain onto each of the cleaning shoes 60. In practice, a 360° curtain of uncleaned grain extends between the outlet of the infeed housing 35 and the grain pans 65 of the cleaning mechanism. This distribution of uncleaned grain on the cleaning shoes 60 is virtually unaffected when operating in hilly conditions.

Air being blown by the fan 40 through the first annual passageway 44 along the flow line A partially cleans the grain of chaff, short straw, etc., to make a part of this residue airborne before the grain contacts the cleaning shoe 60. The airborne residue eventually passes out the discharge end 21 of the cleaning cylinder 50. The oscillating movement of the cleaning shoe 60, as seen in phantom in Fig. 5, in a direction non-parallel to the axis of rotation 25 of the cleaning cylinder 50 causes the grain on the cleaning shoe 60 to "walk" rearwardly, as one skilled in the art will readily realize.

The grain discharged by the infeed auger 36 onto the grain pans 65 will be in the form of a thick mat. The aforementioned oscillatory movement of the cleaning shoes 60 effects a grading of the material lying on the grain pan by weight. This pre-classification, before passing over the sieves, assists in the cleaning operation in that the heavier grain kernels will be at the bottom of the mat with the lighter chaff and other unwanted residue on top of the mat where it is more easily made airborne.

The grain being walked rearwardly over the grain pans 65 ultimately passes through the raking tines 66 and onto the inner sieves 67. Air being blown by the fan 40 through the second passageway 46 along the flow path B effects a second cleaning blast of air to the grain before it contacts the inner sieves 67. Any grain kernel becoming separated from a cleaning shoe 60 and falling toward the center will become engaged by the impeller 80 and directed radially outwardly back onto any of the cleaning shoes 60 by the rotating blades 81, where centrifugal force will be operable to move the grain outwardly through the sieves 67, 68.

The partially cleaned grain falling onto the inner sieves 67 from the grain pans 65 is further cleaned by air blown by the fan 40 passing through the second passageway 46 along flow paths C and D, separating the chaff and other unwanted residue from the grain and discharging it rearwardly in an airborne manner. The grain on the inner sieves 67 near the grain pan 65 will still be in a somewhat of a mat of decreasing thickness as it extends rearwardly on the sieves 67. The air blown by the fan 40 continues blowing through the sieves 67, 68 in a rearward direction partly because of the deflector vanes 48 and partly because of the presence of the mat of crop on the inner sieves 67. Additional deflector vanes may equally be mounted proximate to the cleaning sieves 67, 68 at locations radially outwardly therefrom. It should be noted that it is desirable to have a more concentrated blast of air at the beginning of the cleaning cylinder 50 because of the greater thickness of the grain mat on the sieves 67, 68 in that area. The particular design of the fan housing 42 permits the installation of a comparatively small diameter fan 40 when compared with the over all dimensions of the cleaning cylinder 50. Yet a main flow of cleaning air (flows C and D) is directed from outside the cleaning cylinder 50 in an inward direction through the cleaning sieves 67, 68 and into the axial opening in the cleaning cylinder 50 to make unwanted residue airborne within said axial opening.

Grain passing under influence of the combined actions of centrifugal forces and oscillatory actions in a radially outward direction through the inner sieves 67 lands on the outer sieves 68 through which it equally must pass radially outwardly under influence of the same combined actions before leaving the cleaning shoes 60. The grain on the inner and outer sieves 67, 68 continues to be walked rearwardly by the oscillatory motion of the cleaning shoes 60 until passing through the second sieve 68. Any grain or unthreshed heads not passing through the inner sieves 67 will finally pass through the raking tines 69 at the end of the inner sieves 67 and be returned to the threshing and separating mechanism 16 by the tailings auger 79. Chaff, straw and other unwanted residue is discharged from the end 21 of the cleaning cylinder 50 to be deposited on the ground rearwardly of the base unit 10.

The cleaning cylinder 50 is rotated so as to subject the grain on the cleaning shoes 60 to centrifugal forces in the range of five times the force of gravity. On the other hand, the fan housing 42, infeed housing 35 and infeed chute 34 are stationary structures. Air blowing around the infeed chute 34 and the annular passageways 44, 46 provide for 360° cleaning action within the cleaning cylinder 50. Any irregularities in the distribution of cleaning air from the fan 40 through the cleaning cylinder 50 do not have a significant effect on the performance of the cleaning mechanism 20 because of the relatively rapid rotation of the cleaning cylinder 50.

Cleaned grain exiting radially outwardly from the cleaning shoe 60 falls by gravity into the conveying auger 72 to be fed into the grain elevator 22 for transport to the grain tank 24.

The use of centrifugal force to urge clean grain through the sieves 67, 68, instead of gravity, as is used in conventional cleaning systems, provides for a greatly improved capacity with a shorter cleaning device that is substantially independent of hillside, lateral or fore-and-aft inclinations.

Furthermore, the amount of centrifugal force to be applied to the grain is variable by controlling the speed of rotation of the cleaning cylinder 50, while gravitations forces are not.

The capacity and efficiency of the cleaning mechanism according to the present invention is totally unaffected by hillside conditions.

Aspects of the combine harvester with the rotary cleaning mechanism described herein are claimed in the co-pending European patent specifications nos. 101 131; 101 132; 101 133 and 102 116.

**Claims**

1. A combine harvester having a threshing and separating means (16) for threshing and separating grain crop from waste material in crop material fed thereto, and a cleaning mechanism (20) mounted for receiving threshed grain from the threshing and separating means (16) and cleaning unwanted residue from threshed grain; the cleaning mechanism (20) comprising:
— rotary cleaning means (50) including:
· a subframe (51) rotatable about an axis of rotation (25) and
· a plurality of elongated cleaning shoes (60) circumferentially spaced about the periphery of and mounted on the subframe (51) for rotation in unison therewith; each cleaning shoe (60) having at least one sieve means (67, 68) for the passage of cleaned grain therethrough;
— drive means (93) for rotatably driving the subframe (51) about said axis of rotation (25);
— oscillating means (125, 129, 115, 112, 102) for reciprocating the sieve means (67, 68) in a general, axial direction;
— an infeed mechanism (30) positioned for distributing threshed grain into the rotary cleaning means (50);
— a housing (70) surrounding the rotary cleaning means (50) for collecting cleaned grain from the sieve means (67, 68); and
— fan means (40) for creating a flow of air through the sieve means (67, 68) to urge unwanted residue in the threshed grain into an airborne state for discharge from the combine harvester; characterized in that
— the sieve means (67, 68) are disposed generally parallel to the axis of rotation (25), and
— the generally axially directed reciprocating movement of the sieve means (67, 68) is inclined at an angle relative to the axis of rotation (25) to move threshed grain along said sieve means (67, 68).

2. A combine harvester according to claim 1 characterized in that the oscillating means (125, 129, 115, 112, 102) are operable to reciprocatably drive the respective cleaning shoes (60) supporting the sieve means (67, 68).

3. A combine harvester according to claim 1, characterized in that each cleaning shoe (60) comprises a first sieve (67) and a second sieve (68) mounted outwardly with respect to the axis of rotation (25) from the first sieve (67); both the first and second sieves (67, 68) having openings therethrough and the cleaned grain on said sieves (67, 68) being urged through said openings by the centrifugal forces generated by the rotation of the rotary cleaning means (50).

4. A combine harvester according to claim 3, characterized in that the first and second sieves (67, 68) within each cleaning shoe (60) are positioned substantially parallel to each other and substantially parallel to the axis of rotation (25).

5. A combine harvester according to claim 3, characterized in that the first and second sieves (67, 68) within each cleaning shoe (60) are positioned substantially parallel to each other and at a slight angle to the axis of rotation (25), diverging from the axis of rotation (25) as seen in the direction of movement of the threshed grain along the sieve means (67, 68).

6. A combine harvester according to any of the claims 3 to 5 characterized in that the sieve means (67, 68) extend in a generally tangential direction to the radius of the rotary cleaning means (50) at an angle inclined in the direction of rotation of the rotary cleaning means (50).

7. A combine harvester according to claim 6 characterized in that the angle of inclination in the direction of rotation is in the range of 3 to 10°.

8. A combine harvester according to any of the claims 2 to 7 characterized in that each cleaning shoe (60) is individually reciprocable independently of the other cleaning shoes (60); the oscillating means (125, 129, 115, 112, 102) reciprocating the cleaning shoes (60) in such a manner that the mass of the cleaning shoes (60) being moved in one direction is counterbalanced by the mass of the cleaning shoes (60) being moved in the opposite direction.

9. A combine harvester according to any of the preceding claims, characterized in that the rotary cleaning means (50) are rotatable at a speed sufficient to impart centrifugal forces to the threshed grain on the cleaning shoes (60) whereby the threshed grain is kept in physical contact with the sieve means (67, 68) thereof along a 360° arc relative to the axis of rotation (25).

10. A combine harvester according to any of the preceding claims characterized in that the drive means (93) are operable to rotate the rotary cleaning means (50) to urge cleaned grain through the sieve means (67, 68) with centrifugal forces approximately five times the force of gravity.

11. A combine harvester according to any of the claims 2 to 10, characterized in that each cleaning shoe (60) has a pair of spaced apart, generally parallel side walls (62, 63) mounting the sieve means (67, 68); said side walls (62, 63) being disposed generally parallel with respect to the axis of rotation (25) in an outward direction and the side walls (62, 63) of adjacent cleaning shoes (60) being positioned proximate to one another at their inwardmost position and diverging outwardly therefrom; one of each pair of sidewalls (62, 63) being provided with a seal (64) that engages the proximate sidewall of the adjacent cleaning shoe (60) to prevent crop material from passing therebetween.

12. A combine harvester according to any of the claims 2 to 11 characterized in that the oscillating means (125, 129, 115, 112, 102) comprise linkage means (102, 112) pivotally mounted on the subframe (51) at first pivot axes (103, 115) and pivotally connected at second pivot axes (104, 113) to the respective cleaning shoes (60) for reciprocably mounting the respective cleaning shoes (60) on the subframe (51); the first pivot axes (103, 115) being spaced axially from the second pivot axes (104, 113) to reciprocate the cleaning shoes (60) with the sieve means (67, 68) thereon in said generally axial direction at an angle relative to the axis of rotation (25) to move threshed grain along the sieve means (67, 68).

13. A combine harvester according to claim 12 characterized in that the oscillating means (125, 129, 115, 112, 102) further also comprise actuating means (125) which are operatively coupled by rocker linkages (129, 115) to at least one of the mounting linkage means (112) associated with each individual cleaning shoe (60) to effect a reciprocating movement of said mounting linkage means (112) and the cleaning shoes (60) supported thereby.

14. A combine harvester according to any of the preceding claims characterized in that the cleaning shoes (60) are disposed adjacent one another at a distance spaced from the axis of rotation (25) such that the rotary cleaning means (50) have an axial opening therethrough and an infeed mechanism (30) is provided for conveying the uncleaned grain into the axial opening for distribution radially outwardly onto the cleaning shoes (60).

15. A combine harvester according to claim 14 characterized in that each cleaning shoe (60) comprises grain pan means (65) spaced radially outwardly of the discharge end of the infeed mechanism (30) for receiving threshed grain therefrom on the one hand, and disposed radially inwardly of the sieve means (67, 68) on the other hand; the oscillating means (125, 129, 115, 112, 102) being operable to also reciprocate the grain pan means (65) in the generally axial direction inclined at an angle relative to the axis of rotation (25) for transferring said threshed grain to the sieve means (67, 68) and the fan means (40) being operable to direct a flow of air between the infeed housing (35) and the grain pan means (65) to partially clean the threshed grain before being received by the grain pan means (65) from the infeed mechanism (30) and a further flow of air between the grain pan means (65) and the sieve means (67, 68) to partially clean the threshed grain of unwanted residue before being received by the sieve means (67, 68) from the grain pan means (65).

16. A combine harvester according to any of the preceding claims; characterized in that the housing (70) collect cleaned grain exiting the cleaning shoes (60) and direct said cleaned grain by gravity into a conveying mechanism (72) for removal from the cleaning mechanism (20).

17. A method of cleaning threshed grain in a combine harvester comprising the steps of:
— feeding the threshed grain into rotary cleaning means (50) which are rotatable along an axis of rotation (25) and which include sieve means (67, 68);
— rotating the rotary cleaning means (50) at a speed sufficient to impart centrifugal forces on the threshed grain on the sieve means (67, 68) to urge grain radially outwardly through openings therein;
— reciprocating in a generally axial direction and simultaneously with the rotating step, a plurality of elongated, generally axially extending cleaning shoes (60) which are mounted around the circumference of the rotary cleaning means (50) and which include the sieve means (67, 68);
— creating a flow of air through the rotary cleaning means (50) to clean unwanted residue in the threshed grain by making the residue airborne;
— collecting cleaned grain passing radially outwardly through the sieve means (67, 68) of the rotary cleaning means (50) for transfer to a storage tank, and
— discharging unwanted residue from the rotary cleaning means (50) in an airborne state;
the method being characterized in that the generally axially directed reciprocational movement of the cleaning shoes (60) is inclined inwardly toward the axis of rotation as seen in the intended direction of movement of threshed grain axially through the rotary cleaning means (50) and with the sieve means (67, 68) extending generally parallel to the axis of rotation (25); the reciprocating step in said generally axially and inwardly inclined direction together with the rotating step and the step of creating a flow of air being operable to convey threshed grain generally axially along the sieve means (67, 68) while cleaning grain on said sieve means (67, 68) and helping cleaned grain passing through the sieve openings.

18. A method according to claim 17, characterized in that the reciprocating step includes:
moving each cleaning shoe (60) out of phase with the other cleaning shoes (60).

19. A method according to claim 18, characterized in that the reciprocating step further includes:
counterbalancing the reciprocating movements of the cleaning shoes (60) by equalizing the number of cleaning shoes (60) being moved in one direction with the number of cleaning shoes (60) being moved in the opposite direction.

20. A method according to any of the claims 17 to 19, characterized in that the feeding step includes the step of receiving threshed grain on a grainpan (65) in each cleaning shoe (60), and in that the reciprocating step is operable to convey threshed grain along each grainpan (65) and toward associated sieve means (67, 68).

21. A method according to claim 20 characterized in that it further comprises the step of:
combing through the threshed grain being conveyed from the grainpan (65) onto the sieve (67) to help clean unwanted residue therefrom.

**Patentansprüche**

1. Mähdrescher mit einer Dresch- und Trenneinrichtung (16) zum Dreschen und Trennen von Korn-Erntegut und Abfallmaterial, das in der Dresch- und Trenneinrichtung zugeführten Erntematerial enthalten ist, und mit einem Reinigungsmechanismus (20), der derart befestigt ist, daß er das gedroschene Korn von den Dresch- und Trenneinrichtungen (16) aufnimmt und das gedroschene Korn von unerwünschten Rückständen reinigt, wobei der Reinigungsmechanismus folgende Teile umfaßt:

— rotierende Reinigungseinrichtungen (50), die einen um eine Drehachse (25) drehbaren Hilfsrahmen (51) und eine Vielzahl von langgestreckten Reinigungseinheiten (60) einschließen, die in Umfangsrichtung mit Abstand um den Umfang des Hilfsrahmens (51) herum angeordnet und an diesem für eine gemeinsame Drehung befestigt sind, wobei jede Reinigungseinheit (60) zumindestens eine Siebeinrichtung (67, 68) für den Durchlauf von gereinigtem Korn aufweist,

— Antriebseinrichtungen (93) für den Drehantrieb des Hilfsrahmens (51) um die Drehachse (25),

— Schwingungseinrichtungen (125, 129, 115, 112, 102) zur Hin- und Herbewegung der Siebeinrichtungen (67, 68) in einer allgemein axialen Richtung,

— einen Zuführungsmechanismus (30), der zur Verteilung des gedroschenen Korns in die rotierenden Reinigungseinrichtungen (50) angeordnet ist,

— ein Gehäuse (70), das die rotierende Reinigungseinrichtung (50) umgibt, um gereinigtes Korn von den Siebeinrichtungen (67, 68) zu sammeln, und

— Gebläseeinrichtungen (40) zur Erzeugung eines Luftstromes durch die Siebeinrichtungen (67, 68), um unerwünschte Rückstände in dem gedroschenen Korn fortzublasen, so daß diese aus dem Mähdrescher austreten,

dadurch gekennzeichnet, daß

— die Siebeinrichtungen (67, 68) allgemein parallel zur Drehachse (25) angeordnet sind, und daß

— die allgemein axial gerichtete Hin- und Herbewegung der Siebeinrichtungen (67, 68) unter einem Winkel gegenüber der Drehachse (25) derart geneigt ist, daß das gedroschene Korn entlang der Siebeinrichtungen (67, 68) bewegt wird.

2. Mähdrescher nach Anspruch 1, dadurch gekennzeichnet, daß die Schwingungseinrichtungen (125, 129, 115, 112, 102) so betätigbar sind, daß sie die jeweiligen die Siebeinrichtungen (67, 68) halternden Reinigungseinheiten in eine Hin- und Herbewegungen antreiben.

3. Mähdrescher nach Anspruch 2, dadurch gekennzeichnet, daß jede Reinigungseinheit (60) ein erstes Sieb (67) und ein zweites bezüglich der Drehachse (25) jenseits des ersten Siebes (67) befestigtes Sieb aufweist, daß sowohl das erste als auch das zweite Sieb (67, 68) durchgehende Öffnungen aufweisen und daß das gereinigte Korn auf den Sieben (67, 68) durch die Zentrifugalkräfte hindurch bewegt wird, die durch die Drehung der rotierenden Reinigungseinrichtungen (50) erzeugt werden.

4. Mähdrescher nach Anspruch 3, dadurch gekennzeichnet, daß die ersten und zweiten Siebe (67, 68) innerhalb jeder Reinigungseinheit (60) im wesentlichen parallel zueinander und im wesentlichen parallel zur Drehachse (25) angeordnet sind.

5. Mähdrescher nach Anspruch 3, dadurch gekennzeichnet, daß die ersten und zweiten Siebe (67, 68) innerhalb jeder Reinigungseinheit (60) im wesentlichen parallel zueinander und unter einem geringen Winkel gegenüber der Drehachse (25) geneigt sind und von der Drehachse (25) aus bei Betrachtung in Bewegungsrichtung des gedroschenen Korns entlang der Siebeinrichtungen (67, 68) divergieren.

6. Mähdrescher nach einem der Ansprüche 3—5, dadurch gekennzeichnet, daß sich die Siebeinrichtungen (67, 68) in einer allgemein tangentialen Richtung zum Radius der rotierenden Reinigungseinrichtungen (50) unter einem Winkel erstrecken, der in der Drehrichtung der rotierenden Reinigungseinrichtungen (50) geneigt ist.

7. Mähdrescher nach Anspruch 6, dadurch gekennzeichnet, daß der Neigungswinkel in der Drehrichtung im Bereich von 3—10 Grad liegt.

8. Mähdrescher nach einem der Ansprüche 2—7, dadurch gekennzeichnet, daß jede Reinigungseinheit (60) getrennt unabhängig von den anderen Reinigungseinheiten (60) hin- und herbewegbar ist und daß die Schwingungseinrichtungen (125, 129, 115, 112, 102) die Reinigungseinheiten (60) derart hin- und herbewegen, daß die Masse der in einer Richtung bewegten Reinigungseinheiten (60) durch die Masse der sich in der entgegengesetzten Richtung bewegenden Reinigungseinheiten (60) ausgeglichen ist.

9. Mähdrescher nach einem der vorhergehenden Ansprüche, dadurch gekennzeichnet, daß die rotierenden Reinigungseinrichtung (50) mit einer Drehzahl drehbar sind, die ausreicht, um Zentrifugalkräfte auf das gedroschene Korn auf den Reinigungseinheiten (60) auszuüben, so daß das gedroschene Korn über einen Bogen von 360 Grad bezogen auf die Drehachse (25) in physikalischer Berührung mit den Siebeinrichtungen (67, 68) der Reinigungseinheiten (60) gehalten wird.

10. Mähdrescher nach einem der vorhergehenden Ansprüche, dadurch gekennzeichnet, daß die Antriebseinrichtungen (93) derart betätigbar sind, daß sie die rotierenden Reinigungseinrichtungen (50) derart in Drehung versetzen, daß gereinigtes Korn durch die Siebeinrichtungen (67, 68) mit Zentrifugalkräften hindurch bewegt wird, die ungefähr dem 5-fachen der Schwerkraft entsprechen.

11. Mähdrescher nach einem der Ansprüche 2—10, dadurch gekennzeichnet, daß jede Reinigungseinheit (60) zwei mit Abstand angeordnete allgemein parallele Seitenwände (62, 63) aufweist, die die Siebeinrichtungen (67, 68) haltern, daß die Seitenwände (62, 63) allgemein parallel zur Drehachse (25) in einer nach außen gerichteten Richtung angeordnet sind und die Seitenwände (62, 63) benachbarter Reinigungseinheiten (60) an ihrer innersten Position benachbart zueinander angeordnet sind und von diesen aus nach außen hin divergieren, und daß eine jedes Paares von Seitenwänden (62, 63) mit einer Dichtung (64) versehen ist, die mit der benachbarten Seitenwand der angrenzenden Reinigungseinheit (60) in Eingriff steht, um den Durchgang von Erntematerial zwischen diesen Seitenwänden hindurch zu verhindern.

12. Mähdrescher nach einem der Ansprüche 2—11, dadurch gekennzeichnet, daß die Schwingungseinrichtungen (125, 129, 115, 112, 102) Gestängeteile (102, 112) einschließen, die schwenkbar auf dem Hilfsrahmen (51) an ersten Schwenkachsen (103, 115) befestigt sind und die schwenkbar an zweiten Schwenkachsen (104, 113) an den jeweiligen Reinigungseinheiten (60) befestigt sind, um die jeweiligen Reinigungseinheiten (60) hin- und herbeweglich an dem Hilfsrahmen (51) zu befestigen, und daß die ersten Schwenkachsen (103, 115) in Axialrichtung in Abstand von den zweiten Schwenkachsen (104, 113) angeordnet sind, um die Reinigungseinheiten (60) mit den daran angeordneten Siebeinrichtungen (67, 68) in der allgemein axialen Richtung unter einem Winkel gegenüber der Drehachse (25) hin- und herzubewegen, um das gedroschene Korn entlang der Siebeinrichtungen (67, 68) zu bewegen.

13. Mähdrescher nach Anspruch 12, dadurch gekennzeichnet, daß die Schwingungseinrichtungen (125, 129, 115, 112, 102) weiterhin Betätigungseinrichtungen (125) aufweisen, die betriebsmäßig über Schwinghebel (129, 115) mit zumindestens einem der jeder Reinigungseinheit (60) zugeordneten Befestigungsgestängeteile (112) gekoppelt sind, um eine Hin- und Herbewegung der Befestigungsgestängeteile (112) und der davon gehalterten Reinigungseinheiten (60) hervorzurufen.

14. Mähdrescher nach einem der vorhergehenden Ansprüche, dadurch gekennzeichnet, daß die Reinigungseinheiten (60) benachbart zueinander und in einem Abstand von der Drehachse (25) derart angeordnet sind, daß die rotierenden Reinigungseinrichtungen (50) eine durchgehende Axialöffnung aufweisen und daß ein Zuführungsmechanismus (30) zur Überführung des ungereinigten Korns in die Axialöffnung vorgesehen ist, um dieses Korn in Radialrichtung nach außen auf die Reinigungseinheiten (60) zu verteilen.

15. Mähdrescher nach Anspruch 14, dadurch gekennzeichnet, daß jede Reinigungseinheit (60) Korn-Stufenbodenteile (65) aufweist, die einerseits radial nach außen hin von dem Auslaßende des Zuführungsmechanismus (30) angeordnet sind, um von diesem gedroschenes Korn zu empfangen, und die andererseits radial innerhalb der Siebeinrichtungen (67, 68) angeordnet sind, daß die Schwingungseinrichtungen (125, 129, 115, 112, 102) so betätigbar sind, daß sie außerdem die Korn-Stufenbodeneinrichtungen (65) in der allgemein axialen Richtung mit einer Neigung unter einem Winkel gegenüber der Drehachse (25) hin- und herbewegen, um das gedroschene Korn auf die Siebeinrichtungen (67, 68) zu überführen, und daß die Gebläseeinrichtungen (40) derart betätigbar sind, daß sie eine Luftströmung zwischen das Zuführungsgehäuse (35) und die Korn-Stufenbodeneinrichtungen (65) leiten, um das gedroschene Korn vor dessen Überführung von dem Zuführungsmechanismus (30) auf die Korn-Stufenbodeneinrichtungen (85) zu reinigen, und daß sie eine weitere Luftströmung zwischen die Korn-Stufenbodeneinrichtungen (65) und die Siebeinrichtungen (67, 68) leiten, um das gedroschene Korn teilweise von unerwünschten Rückständen zu reinigen, bevor es von den Korn-Stufenbodeneinrichtungen (65) auf die Siebeinrichtungen (67, 68) überführt wird.

16. Mähdrescher nach einem der vorhergehenden Ansprüche, dadurch gekennzeichnet, daß das Gehäuse (70) aus den Reinigungseinheiten (60) austretendes gereinigtes Korn sammelt und dieses gereinigte Korn durch Schwerkraftwirkung auf einen Fördermechanismus (72) zur Entfernung aus dem Reinigungsmechanismus (20) leitet.

17. Verfahren zur Reinigung von gedroschenem Korn in einem Mähdrescher, bei dem:

— das gedroschene Korn in rotierende Reinigungseinrichtungen (50) eingespeist wird, die um eine Drehachse (25) drehbar sind und die Siebeinrichtungen (67, 68) einschließen,

— die rotierenden Reinigungseinrichtungen (50) mit einer Drehzahl in Drehung versetzt werden, die ausreicht, um auf das gedroschene Korn auf den Siebeinrichtungen (67, 68) Zentrifugalkräfte auszuüben, um das Korn in Radialrichtung durch darin enthaltene Öffnungen zu bewegen,

— eine Vielzahl von langgestreckten, sich allgemein in Axialrichtung erstreckenden Reinigungseinheiten (60) gleichzeitig mit dem Schritt der Drehung in einer allgemein axialen Richtung hin- und herbewegt wird, wobei die Reinigungseinheiten (60) um den Umfang der rotierenden Reinigungseinrichtungen (50) herum befestigt sind und die Siebeinrichtungen (67, 68) einschließen,

— eine Luftströmung durch die rotierenden Reinigungseinrichtungen (50) hervorgerufen wird, um das gedroschene Korn von unerwünschten Rückständen dadurch zu reinigen, daß die Rückstände aufgeblasen werden,

— gereinigtes, radial nach außen durch die Siebeinrichtungen (67, 68) der rotierenden Reinigungseinrichtungen (50) laufendes Korn zur Überführung in einen Speichertank gesammelt wird, und

— die unerwünschten Rückstände von den rotierenden Reinigungseinrichtungen (50) in in Luft verteiltem aufgeblasenem Zustand abgegeben werden,

dadurch gekennzeichnet, daß die allgemein in Axialrichtung gerichtete Hin- und Herbewegung der Reinigungseinheiten (60) nach innen in Richtung auf die Drehachse bei Betrachtung in der beabsichtigten Bewegungsrichtung des gereinigten Korns in Axialrichtung durch die rotierenden Reinigungseinrichtungen (50) geneigt ist, wobei sich die Siebeinrichtungen (67, 68) allgemein parallel zur Drehachse (25) erstrecken, und daß der Schritt der Hin- und Herbewegung in der allgemein in Axialrichtung und nach innen geneigten Richtung zusammen mit dem Schritt der Drehbewegung und dem Schritt der Erzeugung einer Luftströmung eine Überführung des gedroschenen Korns allgemein in Axialrichtung entlang der Siebeinrichtungen (67, 68) bewirkt, während das Korn auf den Siebeinrichtungen (67, 68) gereinigt wird und die Bewegung des gereinigten Korns durch die Sieböffnungen unterstützt wird.

18. Verfahren nach Anspruch 17, dadurch gekennzeichnet, daß der Schritt der Hin- und Herbewegung die Bewegung jeder Reinigungseinheit (60) außer Phase mit den anderen Reinigungseinheiten (60) einschließt.

19. Verfahren nach Anspruch 18, dadurch gekennzeichnet, daß der Schritt der Hin- und Herbewegung weiterhin den Schritt des Ausgleichs der Hin- und Herbewegungen der Reinigungseinheiten (60) dadurch einschließt, daß die Anzahl der Reinigungseinheiten (60), die in einer Richtung bewegt werden, gleich der Anzahl der Reinigungseinheiten (60) gemacht wird, die in der entgegengesetzten Richtung bewegt werden.

20. Verfahren nach einem der Ansprüche 17—19, dadurch gekennzeichnet, daß der Schritt der Zuführung des gedroschenen Korns in die rotierenden Reinigungseinrichtungen (50) den Schritt der Aufnahme des gedroschenen Korns auf einem Korn-Stufenboden (65) in jeder Reinigungseinheit (60) einschließt und daß der Schritt der Hin- und Herbewegung eine Überführung des gedroschenen Korns entlang jedes Stufenbodens (65) und in Richtung auf die zugehörigen Siebeinrichtungen (67, 68) hervorruft.

21. Verfahren nach Anspruch 20, dadurch gekennzeichnet, daß es weiterhin den Schritt des Durchkämmens dès gedroschenen Korns bei seiner Überführung von dem Stufenboden (65) auf das Sieb (67) umfaßt, um die Reinigung des Korns von unerwünschten Rückständen zu unterstützen.

**Revendications**

1. Moissonneuse-batteuse comportant des moyens de battage et de séparation (16) pour battre et séparer une récolte de grain, de déchets contenus dans des produits de récolte amenés jusqu'à ceux-ci, et un mécanisme de nettoyage (20) monté pour recevoir du grain battu provenant des moyens de battage et de séparation (16) et pour éliminer de celui-ci des résidus indésirables; le mécanisme de nettoyage (20) comprenant:
— des moyens rotatifs de nettoyage (50) qui comportent:
· un châssis secondaire (51) apte à tourner autour d'un axe de rotation (25) et
· plusieurs cribles de nettoyage (60) allongés et espacés circonférentiellement autour de la périphérie du châssis secondaire (51) sur lequel ils sont montés en vue d'une rotation en synchronisme avec celui-ci; chaque crible de nettoyage (60) possédant au moins un moyen formant tamis (67, 68) destiné à permettre le passage de grain nettoyé à travers lui;
— des moyens d'entraînement (93) pour entraîner le châssis secondaire (51) en rotation autour dudit axe de rotation (25);
— des moyens oscillants (125, 129, 115, 112, 102) pour animer les moyens formant tamis (67, 68) d'un mouvement de va-et-vient suivant une direction générale axiale;
— un mécanisme d'alimentation (30) positionné pour disperser du grain battu à l'intérieur des moyens rotatifs de nettoyage (50);
— un carter (70) entourant les moyens rotatifs de nettoyage (50) pour recueillir le grain nettoyé provenant des moyens formant tamis (67, 68); et
— des moyens formant ventilateurs (40) pour générer un courant d'air à travers les moyens formant tamis (67, 68), afin de forcer les résidus indésirables présents dans le grain battu à être entraînés en suspension dans l'air en vue d'être évacués de la moissonneuse-batteuse; caractérisée en ce que
— les moyens formant tamis (67, 68) sont disposés sensiblement parallèlement à l'axe de rotation (25), et
— le mouvement de va-et-vient des moyens formant tamis (67, 68), orienté sensiblement axialement, est incliné angulairement par rapport à l'axe de rotation (25) pour déplacer le grain battu le long desdits moyens formant tamis (67, 68).

2. Moissonneuse-batteuse selon la revendication 1, caractérisée en ce que les moyens oscillants (125, 129, 115, 112, 102) entrent en action pour entraîner les cribles de nettoyage (60) respectifs supportant les moyens formant tamis (67, 68) dans un mouvement de va-et-vient.

3. Moissonneuse-batteuse selon la revendication 2, caractérisée en ce que chaque crible de nettoyage (60) comporte un premier tamis (67) et un second tamis (68) monté à l'extérieur du premier tamis (67) par rapport à l'axe de rotation (25); les premier et second tamis (67, 68) possédant tous deux des ouvertures les traversant, et le grain nettoyé présent sur lesdits tamis (67, 68) étant contraint à passer à travers lesdites ouvertures sous l'effet des forces centrifuges engendrées par la rotation des moyens rotatifs de nettoyage (50).

4. Moissonneuse-batteuse selon la revendication 3, caractérisée en ce que les premier et second tamis (67, 68) prévus à l'intérieur de chaque crible de nettoyage (60) sont positionnés sensiblement parallèlement l'un à l'autre et sensiblement parallèlement à l'axe de rotation (25).

5. Moissonneuse-batteuse selon la revendication 3, caractérisée en ce que les premier et second tamis (67, 68) prévus à l'intérieur de chaque crible de nettoyage (60) sont positionnés sensiblement parallèlement l'un à l'autre et forment avec l'axe de rotation (25) un angle peu ouvert en s'écartant de celui-ci, lorsqu'on les considère dans la direction de déplacement du grain battu le long des moyens formant tamis (67, 68).

6. Moissonneuse-batteuse selon l'une quelconque des revendications 3 à 5, caractérisée en ce que les moyens formant tamis (67, 68) s'étendent dans une direction sensiblement tangentielle par rapport au rayon des moyens rotatifs de nettoyage (50), suivant un angle incliné dans la direction de rotation de ces derniers.

7. Moissonneuse-batteuse selon la revendication 6, caractérisée en ce que l'angle d'inclinaison dans la direction de rotation se situe dans la plage allant de 3 à 10°.

8. Moissonneuse-batteuse selon l'une quelconque des revendications 2 à 7, caractérisée en ce que chaque crible de nettoyage (60) est apte à opérer un mouvement de va-et-vient individuel, indépendamment des autres cribles de nettoyage (60); les moyens oscillants (125, 129, 115, 112, 102) animant les cribles de nettoyage (60) d'un mouvement de va-et-vient, de telle manière que la masse des cribles de nettoyage (60) déplacés dans une direction est équilibrée par la masse des cribles de nettoyage (60) déplacés dans la direction opposée.

9. Moissonneuse-batteuse selon l'une quelconque des revendications précédentes, caractérisée en ce que les moyens rotatifs de nettoyage (50) sont aptes à tourner à une vitesse suffisante pour exercer des forces centrifuges sur le grain battu présent sur les cribles de nettoyage (60), le grain battu étant maintenu en contact physique avec les moyens formant tamis (67, 68) de ceux-ci le long d'un arc de cercle de 360° par rapport à l'axe de rotation (25).

10. Moissonneuse-batteuse selon l'une quelconque des revendications précédentes, caractérisée en ce que les moyens d'entraînement (93) agissent pour animer les moyens rotatifs de nettoyage (50) d'un mouvement de rotation, afin de contraindre le grain nettoyé à passer à travers les moyens formant tamis (67, 68) sous l'effet de forces centrifuges approximativement cinq fois supérieures à la force de gravité.

11. Moissonneuse-batteuse selon l'une quelconque des revendications 2 à 10, caractérisée en ce que chaque crible de nettoyage (60) possède deux parois latérales (62, 63) distantes l'une de l'autre et sensiblement parallèles entre elles, qui supportent les moyens formant tamis (67, 68); lesdites parois latérales (62, 63) étant disposées sensiblement parallèlement par rapport à l'axe de rotation (25) dans une direction orientée vers l'extérieur, tandis que les parois latérales (62, 63) de cribles de nettoyage (60) adjacents sont positionnées très près les unes des autres, au niveau de leur position intérieure extrême, et s'écartent depuis celle-ci vers l'extérieur; une paroi latérale sur deux (62, 63) étant pourvue d'un joint d'étanchéité (64) qui vient en contact avec la paroi latérale voisine du crible de nettoyage (60) adjacent pour empêcher des produits de récolte de passer entre elles.

12. Moissonneuse-batteuse selon l'une quelconque des revendications 2 à 11, caractérisée en ce que les moyens oscillants (125, 129, 115, 112, 102) comportent des moyens de liaison (102, 112) montés à pivotement sur le châssis secondaire (51), au niveau de premiers axes de pivotement (103, 115), et reliés à pivotement aux cribles de nettoyage (60) respectifs, au niveau de seconds axes de pivotement (104, 113), en vue d'un montage permettant un mouvement de va-et-vient des cribles de nettoyage (60) respectifs, sur le châssis secondaire (51); les premiers axes de pivotement (103, 115) étant axialement distants des seconds axes de pivotement (104, 113) pour animer les cribles de nettoyage (60) comportant les moyens formant tamis (67, 68) disposés sur eux d'un mouvement de va-et-vient dans ladite direction sensiblement axiale de angulairement par rapport à l'axe de rotation (25), afin de déplacer le grain battu le long des moyens formant tamis (67, 68).

13. Moissonneuse-batteuse selon la revendication 12, caractérisée en ce que les moyens oscillants (125, 129, 115, 112, 102) comportent également des moyens d'actionnement (125) accouplés d'une manière fonctionnelle par l'intermédiaire d'organes de liaison basculants (129, 115) à l'un au moins des moyens de liaison de montage (112) associés à chaque crible de nettoyage (60) individuel pour opérer un mouvement de va-et-vient desdits moyens de liaison de montage (112) et des cribles de nettoyage (60) supportés par ceux-ci.

14. Moissonneuse-batteuse selon l'une quelconque des revendications précédentes, caractérisée en ce que les cribles de nettoyage (60) sont disposés de manière adjacente les uns aux autres, à une distance d'écartement par rapport à l'axe de rotation (25), telle que les moyens rotatifs de nettoyage (50) comportent une ouverture axiale les traversant, tandis qu'un mécanisme d'alimentation (30) est prévu pour acheminer le grain non nettoyé dans l'ouverture axiale en vue de la disperser radialement vers l'extérieur sur les cribles de nettoyage (60).

15. Moissonneuse-batteuse selon la revendication 14, caractérisée en ce que chaque crible de nettoyage (60) comporte des moyens formant tables à grains (65) espacés radialement, vers l'extérieur, de l'extrémité d'évacuation du mécanisme d'alimentation (30) en vue de récupérer le grain battu provenant de celui-ci, d'une part, et disposés radialement, vers l'intérieur, par rapport aux moyens formant tamis (67, 68), d'autre part; les moyens oscillants (125, 129, 115, 112, 102) entrant en action pour animer également les moyens formant tables à grains (65) d'un mouvement de va-et-vient dans la direction sensiblement axiale, inclinée angulairement par rapport à l'axe de rotation (25), en vue de transférer ledit grain battu jusqu'aux moyens formant tamis (67, 68), tandis que les moyens formant ventilateurs (40) interviennent pour diriger un courant d'air entre le carter d'alimentation (35) et les moyens formant tables à grains (65), afin de nettoyer partiellement le grain battu avant qu'il ne parvienne à ces derniers depuis le mécanisme d'alimentation (30), et un autre courant d'air entre les moyens formant tables à grains (65) et les moyens formant tamis (67, 68) pour éliminer partiellement les résidus indésirables du grain battu avant qu'il ne parvienne aux moyens tamis (67, 68) depuis les moyens formant tables à grains (65).

16. Moissonneuse-batteuse selon l'une quelconque des revendications précédentes, caractérisée en ce que le carter (70) recueille le grain propre sortant des cribles de nettoyage (60) et dirige ledit grain propre par gravité dans un mécanisme convoyeur (72) en vue de l'évacuer du mécanisme de nettoyage (20).

17. Procédé pour le nettoyage de grain battu dans une moissonneusebatteuse, comportant les étapes qui consistent à:

— introduire le grain battu dans des moyens rotatifs de nettoyage (50) aptes à tourner autour d'un axe de rotation (25) et comprenant des moyens formant tamis (67, 68);

— animer les moyens rotatifs de nettoyage (50) d'un mouvement de rotation à une vitesse suffisante pour exercer des forces centrifuges sur le grain battu présent sur les moyens formant tamis (67, 68), afin d'obliger le grain à passer radialement vers l'extérieur à travers des ouvertures ménagées dans ceux-ci;

— animer d'un mouvement de va-et-vient, dans une direction sensiblement axiale et simultanément à l'étape de rotation, plusieurs cribles de nettoyage (60) allongés et s'étendant sensiblement axialement, qui sont montés autour de la circonférence des moyens rotatifs de nettoyage (50) et comportent les moyens formant tamis (67, 68);

— générer un courant d'air à travers les moyens rotatifs de nettoyage (50) pour éliminer des résidus indésirables présents dans le grain battu en mettant les résidus en suspension dans l'air;

— recueillir le grain nettoyé qui passe radialement vers l'extérieur à travers les moyens formant tamis (67, 68) des moyens rotatifs de nettoyage (50) en vue de le transférer jusqu'à une benne de stockage, et

— évacuer, dans un état de suspension dans l'air, les résidus indésirables hors des moyens rotatifs de nettoyage (50);

le procédé étant caractérisé en ce que le mouvement de va-et-vient des cribles de nettoyage (60), orienté sensiblement axialement, est incliné vers l'intérieur en direction de l'axe de rotation, lorsqu'il est considéré dans la direction voulue de déplacement axial du grain battu à travers les moyens rotatifs de nettoyage (50) et les moyens formant tamis (67, 68) s'étendant sensiblement parallèlement à l'axe de rotation (25); l'étape de va-et-vient suivant ladite direction sensiblement axiale et inclinée vers l'intérieur ainsi que l'étape de rotation et l'étape de génération d'un courant d'air intervenant pour acheminer le grain battu sensiblement axialement le long des moyens formant tamis (67, 68) tout en nettoyant le grain présent sur lesdits moyens formant tamis (67, 68) et en aidant le grain nettoyé à passer à travers les ouvertures de tamis.

18. Procédé selon la revendication 17, caractérisé en ce que l'étape de va-et-vient consite à:

déplacer chacun des cribles de nettoyage (60) de manière décalée par rapport aux autres.

19. Procédé selon la revendication 18, caractérisé en ce que l'étape de va-et-vient consiste, en outre, à:

équilibrer les mouvements de va-et-vient des cribles de nettoyage (60) en rendant le nombre de cribles de nettoyage (60) déplacées dans une direction égal au nombre de cribles de nettoyage (60) déplacés dans la direction opposée.

20. Procédé selon l'une quelconque des revendications 17 à 19, caractérisé en ce que l'étape d'alimentation comporte l'étape qui consiste à récupérer le grain battu sur une table à grains (65) prévue dans chaque crible de nettoyage (60), et en ce que l'étape de va-et-vient intervient pour acheminer le grain battu le long de chaque table à grains (65) et en direction de moyens formant tamis (67, 68) associés.

21. Procédé selon la revendication 20, caractérisé en ce qu'il comporte, en outre, l'étape qui consiste à effectuer un ratissage du grain battu en train d'être acheminé depuis la table à grains (65) jusque sur le tamis (67) pour aider à éliminer de celui-ci les résidus indésirables.

*Fig. 1*

Fig. 2

2

Fig. 3

*Fig. 4*

*Fig. 5*

*Fig. 6*

*Fig. 7a*

*Fig. 7b*

0 102 117